# EUROPÄISCHE PATENTSCHRIFT

(11) **EP 2 381 430 B1**
(45) Veröffentlichungstag und Bekanntmachung des Hinweises auf die Patenterteilung: **21.11.2012**
(21) Anmeldenummer: 10004401.5
(22) Anmeldetag: 26.04.2010
(51) Int. Cl.: G08B 29/04, G08B 29/14, G01J 1/02, G08B 17/00, G01J 5/02, G01J 5/04

(54) **Verfahren und Vorrichtung zum Reinigen einer Sichtscheibe eines Brandmelders**
Method and device for cleaning a viewing panel of a fire alarm
Procédé et dispositif de nettoyage d'un voyant d'un détecteur d'incendie

(43) Veröffentlichungstag der Anmeldung: 26.10.2011
(73) Patentinhaber: Minimax GmbH & Co KG, 23840 Bad Oldesloe (DE)
(72) Erfinder: Hartwig, Steffen, Dipl.-Ing., 21455 Reinbek (DE)
(74) Vertreter: Lüdtke, Frank

(56) Entgegenhaltungen:
- EP-A1- 0 501 049
- WO-A1-91/11694
- DE-B3-102006 025 286
- US-A- 4 525 080

## Beschreibung

Die Erfindung betrifft ein Verfahren zum Reinigen einer Sichtscheibe eines Brandmelders entsprechend den Merkmalen des ersten Patentanspruches und eine Vorrichtung zur Durchführung des Verfahrens.

Die Erfindung ist überall dort anwendbar, wo Sichtscheiben von Brandmeldern durchsichtig bleiben müssen bzw. in vorgegebenen Abständen eine Reinigung der Scheibe erfolgen muß.

Unter dem Begriff Sichtscheiben sollen alle Materialen verstanden werden, welche mit hoher Transmission elektromagnetische Strahlung zur Detektion von Brandkenngrößen zu Sensorelementen durchlassen.

Sichtscheiben von Brandmeldern gewähren nur eine einwandfreie Funktion, wenn durch diese Signale zum Brandmelder gelangen können. In einer Umgebung, in der Staubpartikel oder Pulver als Schwebestoffe in der Umgebungsluft vorhanden sind, kommt es häufig dazu, daß die Sichtscheibe des Brandmelders durch Schmutz- oder Pulverablagerungen verunreinigt werden, so daß Brandsignale nur ungenügend oder fehlerhaft zum Sensor des Brandmelders gelangen. Es ist daher erforderlich, diese Sichtscheiben immer von Belag oder Verschmutzung freizuhalten.

Um den Verschmutzungsgrad von Sichtscheiben zu überwachen sind dem Fachmann unterschiedliche Möglichkeiten bekannt. In der Regel wird dabei eine Strahlung auf die Sichtscheibe gesandt und die reflektierte und die durch die Sichtscheibe gelangende Strahlung sensorisch gemessen und verglichen.

In DE 42 40 395 C2, US 5,914,489 A oder US 4,728,794 werden diese Verfahren und die entsprechenden Vorrichtungen beschrieben.

Um zu gewährleisten, dass Sichtscheiben von Belag oder Verschmutzung freigehalten werden, wurden Brandmelder mit Luftspüleinrichtungen entwickelt, die entweder dauerhaft ein Luftkissen vor dem Sichtfenster aufbauen, um Ablagerungen von Prozeßstoffen zu verhindern. Andererseits sind Druckspüleinrichtungen bekannt, um das Sichtfenster in regelmäßigen Abständen zu reinigen. Darüber hinaus kann die Reinigung auch mechanisch erfolgen.

Aus der "Betriebsanleitung für Flammenmelder FMX3511" der Minimax GmbH ist ein Flammenmelder bekannt, dessen Sichtscheibe in einer Konsole mit einer Luftspülung versehen ist, die dafür sorgt, daß ein gleichmäßiger Luftstrom über der Sichtscheibe vorhanden ist, der verhindern soll, daß Prozeßstoffe sich auf der Sichtscheibe absetzen und auf diese Weise nach und nach die Empfindlichkeit des Flammenmelders beeinträchtigt wird, so daß ein fehlerhaftes Alarmsignal entsteht. All diese bekannten Möglichkeiten zur Reinigung der Sichtscheibe eines Brandmelders können nicht verhindern, daß es bei Pulvern mit bestimmten Eigenschaften in der Umgebung des Brandmelders dennoch zu Ablagerungen auf der Sichtscheibe kommt, die nicht mit Druckspüleinrichtungen oder einem Luftkissen entfernbar sind. Bei Sichtscheiben die mit einem Schutzgitter versehen sind, ist auch keine mechanische Reinigung ohne Probleme möglich, es sei denn, das Schutzgitter wird manuell entfernt und die Sichtscheibe mechanisch gereinigt.

EP 0501 049 A1 beschreibt ein Verfahren zum Reinigen einer Sichtscheibe eines Brandmelders, wobei ein pulsierender Gasstrom über die Oberfläche der Sichtscheibe geführt wird. Das dafür vorgeschlagene Verfahren ist mit Aufwand verbunden.

Es ist daher Aufgabe der Erfindung, ein Verfahren und eine Vorrichtung zu entwickeln, mit der die Sichtscheibe eines Brandmelders mit geringem Aufwand kontinuierlich von Staubpartikeln freigehalten wird.

Diese Aufgabe wird durch ein Verfahren nach den Merkmalen des ersten Patentanspruches und eine Vorrichtung nach den Merkmalen des Anspruches 6 gelöst.

Unteransprüche geben vorteilhafte Ausgestaltungen der Erfindung wieder.

Das erfindungsgemäße Verfahren zum Reinigen einer Sichtscheibe eines Brandmelders sieht einen pulsierenden Gasstrom über die Oberfläche der Sichtfläche des Brandmelders vor.
Dieser Gasstrom kann kontinuierlich oder diskontinuierlich zugeführt werden.
Die erfindungsgemäße Vorrichtung für die Reinigung der Sichtscheibe eines Brandmelders besteht aus einem um die Sichtscheibe angeordneten Haltering mit einer elastischen Lippe, die mit der Sichtscheibe einen Hohlraum bildet, in den durch eine Öffnung ein Gas einströmt, das einen Druck im Hohlraum aufbaut, bis die elastische Lippe durch einen rhythmisch entweichenden oder pulsierenden Luftstrom angehoben wird und dabei auf die Sichtscheibe schlägt. Durch dieses Schlagen auf die Sichtscheibe entsteht zum einen eine Schwingung in der Sichtscheibe, die ein Abheben der Staubpartikel zur Folge hat, und zum anderen ein Gasimpuls, der die angehobenen Partikel hinweg weht. Damit können auch Staubpartikel von der Sichtscheibe entfernt werden, die mit kontinuierlichen Luftströmen nicht entfernbar sind und die Lichtdurchlässigkeit der Sichtscheibe negativ beeinflussen.

Der Haltering kann eine beliebige Form um die Sichtscheibe aufweisen, das heißt, er kann kreisförmig, oval sein oder eine andere Form einnehmen, je nachdem, welche Form die zu reinigende Sichtscheibe hat oder in welcher er um die zu reinigende Sichtscheibe befestigt werden soll.

Die elastische Lippe kann unabhängig von dem Haltering eine beliebige Form haben, um selektive Bereiche der Sichtscheibe, vorzugsweise im Sichtwinkel der Sensoren, von Verschmutzungen freizuhalten.

Als Gas dient in der Regel Druckluft. Diese kann mit einer Druckerzeugung über Leitungen oder einen Schlauch in den Hohlraum im Haltering eingebracht werden. Als Druckerzeuger kann beispielsweise ein ölfreier Kompressor eingesetzt werden, wobei der Arbeitsdruck vorzugsweise zwischen zwei und vier Bar liegen sollte.

Am Haltering ist eine elastische Lippe angeordnet, die bei Überschreiten eines bestimmten Druckes im Hohlraum die Luft durch Abheben entläßt und eine Schlag bewegung auf die Sichtscheibe ausübt. Vorteilhaft ist es, die elastische Lippe in Gummi auszuführen. Geeignet sind aber auch verschiedene Kunststoffe, die die erforderliche Elastizität aufweisen.

Die Luftzufuhr in den Hohlraum zwischen der Sichtscheibe und dem Haltering kann kontinuierlich und diskontinuierlich durch Luftöffnungen erfolgen. Bei einer kontinuierlichen Luftzufuhr steigt der Druck im Hohlraum so lange an, bis die elastische Lippe mit schlagender Bewegung die im Hohlraum angestaute Luft entläßt. Bei diskontinuierlicher Luftzufuhr geschieht das auf analoge Weise. Die Luftzufuhr erfolgt über einen Kanal im Haltering, von dem Luftöffnungen in den Hohlraum führen. Dabei ist es vorteilhaft, vier oder acht Öffnungen im Haltering zur Luftzufuhr in den Hohlraum zuzuordnen.

Weiterhin ist es vorteilhaft, über den Umfang des Halteringes vier oder acht Luftöffnungen anzuordnen, die im Winkel von 90 oder 45° versetzt sind, aber jede beliebige Anzahl von Luftöffnungen und deren Anordnung, auch unsymmetrisch, sind möglich. Ein Schlauch zur Zuführung der Druckluft kann von der Seite, aber auch von unten, in den Haltering geführt werden.

Vorteilhaft ist es weiterhin, zwischen Schlauch und Haltering eine Kupplung anzuordnen, so daß beide Teile leicht trennbar sind.

Eine besonders vorteilhafte Ausgestaltung besteht darin, den Verschmutzungsgrad der Sichtscheibe sensorisch zu überwachen. Das kann beispielsweise mittels Sensor und Lichtquelle erfolgen. Bei Überschreiten eines vorgegebenen Verschmutzungsgrades erfolgt ein Signal an eine Steuereinheit, die eine Druckerzeugungseinheit einschaltet, die einen kontinuierlichen Gasstrom erzeugt der in den Hohlraum zwischen Sichtscheibe und Lippe geführt wird. Damit erfolgt immer nur dann das Reinigen der Sichtscheibe mittels schlagender Lippe und pulsierendem Luftstrom, wenn der Verschmutzungsgrad eine bestimmte sensorisch erfaßte Grenze überschreitet. Sobald die Sichtscheibe einen niedrigeren Verschmutzungsgrad aufweist und der Sensor das erkennt, ergeht ein Signal an die Steuereinheit, die die Druckerzeugungseinheit wieder abschaltet.

Verfahren und Vorrichtung zur Überwachung des Verschmutzungsgrades sind dem Fachmann bekannt, wie der einleitend beschriebene Stand der Technik zeigt.

Die erfindungsgemäße Vorrichtung hat den Vorteil, daß die Sichtscheibe eines Brandmelders kontinuierlich oder diskontinuierlich und mit geringem Aufwand von Verschmutzungen gereinigt werden kann, besonders dann, wenn die Sichtscheibe für mechanische Reinigungsmöglichkeiten unzugänglich ist.

Im Folgenden soll die Erfindung an einem Ausführungsbeispiel und drei Figuren erläutert werden.

Die Figuren zeigen:
- Figur 1:: Spülvorrichtung in einer Ansicht von der Seite geschnitten
- Figur 2:: Spülvorrichtung in einer Ansicht von oben
- Figur 3:: Einzelheit Z von Figur 2 mit Luftzufuhr von der Seite und geöffneter elastischer Lippe.

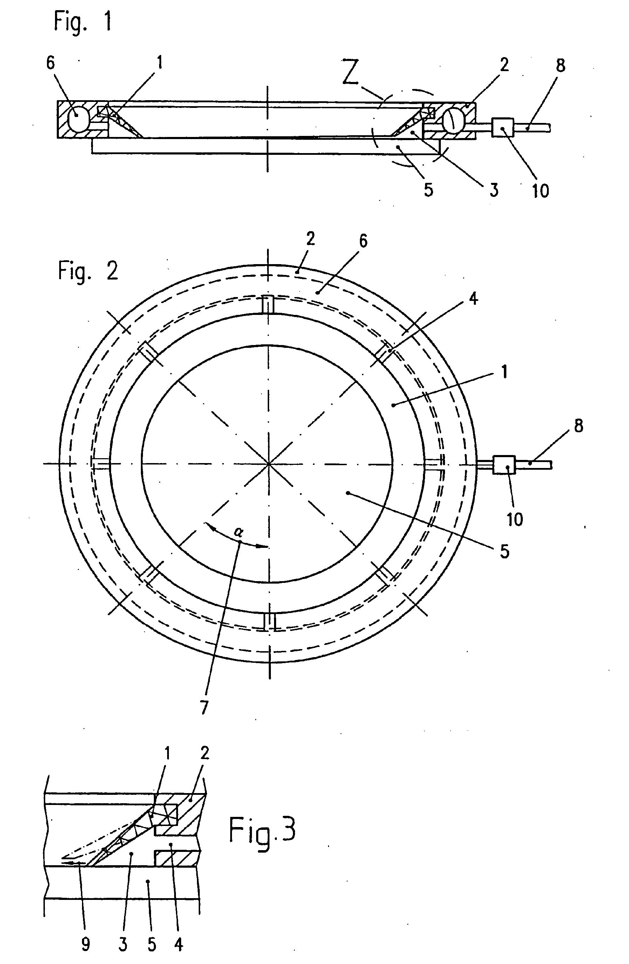

Die *Figur 1* zeigt eine Spülvorrichtung in Ansicht von der Seite geschnitten, wobei über der Sichtscheibe 5 der Haltering 2 angeordnet ist, an dem sich die elastische Lippe 1 befindet, die einen umlaufenden Hohlraum 3 mit der Sichtscheibe 5 bildet, wobei ein umlaufender Kanal 6 im Haltering 2 angeordnet ist, von dem Luftöffnungen 4 in den umlaufenden Hohlraum 3 führen und durch einen Schlauch mit einer Kupplung 10 Luft in den Kanal 6 geführt wird.

Die *Figur 2* zeigt die Spülvorrichtung in einer Ansicht von oben, aus der deutlich ersichtlich ist, daß acht Luftöffnungen 4 zwischen dem Hohlraum 3 und dem Kanal für Preßluft 6 angeordnet sind. Die Luftöffnungen 4 sind in einem Winkel 7 von 45° zueinander versetzt. In den Luftkanal 6 führt von außen eine Luftöffnung, die mit einer Kupplung 10 und einem Schlauch 8 verbunden ist.

Die *Figur 3* zeigt die Einzelheit Z von Figur 1, aus der die Luftöffnung zum Hohlraum 3 zwischen Sichtscheibe 5 und elastischer Lippe 1 deutlich zu erkennen ist, wobei die elastische Lippe 1 eine schlagende Bewegung auf die Sichtscheibe 5 ausübt, wobei der Luftstrom 9 aus dem Hohlraum 3 entweicht. Dadurch gelingt es auch, auf der Sichtscheibe 5 anhaftende Partikel von der Sichtscheibe 5 regelmäßig auf einfache Weise zu entfernen.

## Patentansprüche

1. Verfahren zum Reinigen einer Sichtscheibe eines Brandmelders, wobei ein pulsierender Gasstrom über die Oberfläche der Sichtscheibe des Brandmelders geführt wird, bei dem ein rhythmisch entweichender oder pulsierender gasstrom dadurch entsteht, wobei ein um die sichtscheibe angeordneter Haltering eine elastischer. Lippe aufweist die mit der Sichtscheibe einen Hohlraum bildet worin Druck aufgebaut wird
- und als pulsierender gastrom entweicht, indem die elastische Lippe (1) auf die sichtscheisebe (5) schlägt.

2. Verfahren nach Anspruch 1, **dadurch gekennzeichnet, daß** der Gasstrom dem Hohlraum (3) zwischen der elastischen Lippe (1) und der Sichtscheibe (5) kontinuierlich zugeführt wird.

3. Verfahren nach Anspruch 1, **dadurch gekennzeichnet, daß** der Gasstrom dem Hohlraum (3) zwischen der elastischen Lippe (1) und der Sichtschiebe (5) diskontinuierlich zugeführt wird.

4. Verfahren nach Anspruch 3, **dadurch gekennzeichnet, daß** der Verschmutzungsgrad der Sichtscheibe (3) überwacht und bei Überschreiten einer vorgegebenen Grenze des Verschmutzungsgrades ein Signal an eine Steuereinheit gegeben wird, die eine Druckerzeugungseinheit schaltet von der der Gasstrom in den Hohlraum (3) zwischen der elastischen Lippe (1) und der Sichtscheibe (5) so lange zugeführt wird, bis der Verschmutzungsgrad die vorgegebene Grenze nicht mehr überschreitet.

5. Verfahren nach einem der Ansprüche 1 bis 4, **dadurch gekennzeichnet, daß** der Arbeitsdruck im Hohlraum (3) 2 bis 3 Bar beträgt.

6. Vorrichtung zum Reinigen einer Sichtscheibe eines Brandmelders nach einem Verfahren des ersten Patentanspruches, bestehend aus einem um die Sichtscheibe angeordneten Haltering mit einer elastischen Lippe (1), die mit der Sichtscheibe (5) einen Hohlraum (3) bildet, in dem Öffnungen (4) für einströmendes Gas angeordnet sind, welches einen Druck im Hohlraum (3) aufbaut, bis die elastische Lippe (1) durch einen rhythmisch entweichenden Gasstrom zur Vibration angeregt wird und dabei auf die Sichtscheibe (5) schlägt.

7. Vorrichtung nach Anspruch 6, **dadurch gekennzeichnet, daß** die elastische Lippe (1) durch den Haltering (2) um den verschmutzungsfreien Raum der Sichtscheibe (5) fixiert ist.

8. Vorrichtung nach Anspruch 6, **dadurch gekennzeichnet, daß** zur Überwachung des Verschmutzungsgrades der Sichtscheibe (5) mindestens ein mit einer Druckerzeugungseinheit verbundenes Sensorüberwachungssystem und eine Steuereinheit angeordnet sind, wobei das Sensorüberwachungssystem geeignet ist, den Verschmutzungsgrad der Sichtscheibe (5) zu messen und ein Signal an eine Steuereinheit zu senden, die die Druckerzeugungseinheit ein- und ausschaltet.

9. Vorrichtung nach Anspruch 6 und 7, **dadurch gekennzeichnet, daß** das einströmende Gas durch einen Kanal (6) im Haltering (2) zu den Öffnungen (4) geführt wird.

10. Vorrichtung nach einem der Ansprüche 6 bis 9, **dadurch gekennzeichnet, daß** die Öffnungen (4) über den Umfang des Halteringes (2) jeweils um einen Winkel (7) von 90 oder 45° versetzt sind.

## Claims

1. A method for cleaning a viewing pane of a fire alarm, a pulsating gas flow being led across the surface of the viewing pane of the fire alarm, wherein a rhythmically escaping gas or pulsating gas flow is generated by a retaining ring disposed around the viewing pane having an elastic lip that forms a hollow space together with the viewing pane, wherein pressure is built up and escapes as a pulsating gas flow by the elastic lip (1) beating against the viewing pane (5).

2. The method according to claim 1, **characterized in that** the gas flow is continuously supplied to the hollow space (3) between the elastic lip (1) and the viewing pane (5).

3. The method according to claim 1, **characterized in that** the gas flow is discontinuously supplied to the hollow space (3) between the elastic lip (1) and the viewing pane (5).

4. The method according to claim 3, **characterized in that** the degree of fouling of the viewing pane (3) is monitored and when a specified limit of the degree of fouling is crossed, a signal is given to a control unit that activates a pressure generation unit from which the gas flow is supplied into the hollow space (3) between the elastic lip (1) and the viewing pane (5) until the degree of fouling no longer exceeds the specified limit.

5. The method according to one of the claims 1 to 4, **characterized in that** the operating pressure in the hollow space (3) amounts to 2 to 3 bar.

6. A device for cleaning a viewing pane of a fire alarm according to a method of the first patent claim, consisting of a retaining ring disposed around the viewing pane with an elastic lip (1) that, together with the viewing pane (5), forms a hollow space (3) in which are disposed openings (4) for inflowing gas, which builds up pressure in the hollow space (3) until the elastic lip (1) begins to vibrate because of a rhythmically escaping gas flow and thereby beats against the viewing pane (5).

7. The device according to claim 6, **characterized in that** the elastic lip (1) is fixed around the dirt-free space of the viewing pane (5) by the retaining ring (2).

8. The device according to claim 6, **characterized in that** for monitoring the degree of fouling of the viewing pane (5), at least one sensor monitoring system connected to a pressure generation unit and a control unit are disposed, the sensor monitoring system being adapted to measure the degree of fouling of the viewing pane (5) and to send a signal to a control unit that activates and deactivates the pressure generation unit.

9. The device according to claim 6 and 7, **characterized in that** the inflowing gas is led to the openings (4) through a channel (6) in the retaining ring (2).

10. The device according to one of the claims 6 to 9, **characterized in that** the openings (4) are respectively offset by an angle (7) of 90 or 45° around the circumference of the retaining ring (2).

## Revendications

1. Méthode pour nettoyer une vitre d'une alarme incendie, un flux de gaz pulsé étant mené au-dessus de la surface de la vitre de l'alarme incendie, où un flux de gaz pulsé ou s'échappant rythmiquement est formé par un anneau de maintien disposé autour de la vitre ayant une lèvre élastique formant avec la vitre un espace creux qui est mis sous pression, laquelle s'échappe sous forme de flux de gaz pulsé, la lèvre élastique (1) frappant contre la vitre (5).

2. Méthode selon la revendication 1, **caractérisée en ce que** l'espace creux (3) entre la lèvre élastique (1) et la vitre (5) est alimenté en flux de gaz de manière continue.

3. Méthode selon la revendication 1, **caractérisée en ce que** l'espace creux (3) entre la lèvre élastique (1) et la vitre (5) est alimenté en flux de gaz de manière discontinue.

4. Méthode selon la revendication 3, **caractérisée en ce que** le degré d'encrassement de la vitre (3) est surveillé et que lorsqu'une limite prédéfinie du degré d'encrassement est dépassée, un signal est envoyé à une unité de contrôle qui active une unité génératrice de pression à partir de laquelle l'espace creux (3) entre la lèvre élastique (1) et la vitre (5) est alimenté en flux de gaz jusqu'à ce que le degré d'encrassement ne dépasse plus la limite prédéfinie.

5. Méthode selon l'une des revendications 1 à 4, **caractérisée en ce que** la pression de fonctionnement dans l'espace creux (3) s'élève à 2 à 3 bar.

6. Dispositif pour nettoyer une vitre d'une alarme incendie selon une méthode de la première revendication, composé d'un anneau de maintien disposé autour de la vitre avec une lèvre élastique (1) qui forme un espace creux (3) avec la vitre (5), dans lequel sont disposées des ouvertures (4) pour le flux de gaz entrant, lequel met l'espace creux (3) sous pression jusqu'à ce que la lèvre élastique (1) commence à vibrer en raison d'un flux de gaz s'échappant rythmiquement et frappe contre la vitre (5).

7. Dispositif selon la revendication 6, **caractérisé en ce que** la lèvre élastique (1) est fixée par l'anneau de maintien (2) autour de l'espace sans encrassement de la vitre (5).

8. Dispositif selon la revendication 6, **caractérisé en ce qu'**au moins un système de surveillance par détecteur connecté à une unité génératrice de pression et une unité de contrôle sont disposés pour surveiller le degré d'encrassement de la vitre (5), le système de surveillance par détecteur étant apte à mesurer le degré d'encrassement de la vitre (5) et d'envoyer un signal à une unité de contrôle qui active et désactive l'unité génératrice de pression.

9. Dispositif selon la revendication 6 ou 7, **caractérisé en ce que** le gaz entrant est mené jusqu'aux ouvertures (4) via un canal (6) dans l'anneau de maintien (2).

10. Dispositif selon l'une des revendications 6 à 9, **caractérisé en ce que** les ouvertures (4) sont respectivement décalées selon un angle (7) de 90 ou 45° le long de la circonférence de l'anneau de maintien (2).
